# EUROPEAN PATENT APPLICATION

(11) **EP 1 584 926 A1**
(43) Date of publication of application: **12.10.2005**
(21) Application number: 05102662.3
(22) Date of filing: 05.04.2005
(51) Int. Cl.: G01P 1/10, G01P 5/01, G01P 3/26, A42B 1/24, A63C 1/00, A63B 1/00

(54) **A garment, in particular a helmet or a hat, incorporating acoustic warning means responsive to the speed of its wearer**

(30) Priority: 07.04.2004 IT FI20040027 U
(71) Applicant: BORETTI, Gianromano, 50055 Lastra a Signa (Firenze) (IT); Boretti, Letizia, 50055 Lastra a Signa (Firenze) (IT)
(72) Inventor: BORETTI, Gianromano, 50055 Lastra a Signa (Firenze) (IT); Boretti, Letizia, 50055 Lastra a Signa (Firenze) (IT)
(74) Representative: Bardini, Marco Luigi

(57) **Abstract**

A garment, accessory or clothing appendage, for example and in particular, but not exclusively, a hat (1) or a helmet, comprises acoustic warning means suitable for emitting an acoustic alarm in response to the user's speed. For such a purpose, a mechanical or electronic whistle (2) is provided, an air-inlet passage of which faces in the direction of motion of the user, thereby the acoustic alarm is caused directly by the aerodynamic flow resulting from the motion.

## Description

The present invention relates to the field of articles to be worn in sports practice, both amateur and professional, where the expression "worn articles" must be intended as not limited to actual garments, but covering also the accessories and appendages such as helmets, straps, buckles, belts, pins, clips and so on.

In sports disciplines in which the athlete can acquire a substantial speed without the help of external propulsion means, such as cycling, skiing and ice-skating (but this list is clearly not exhaustive), or else in equestrian sports, very harmful crashes often occur due to the difficulty in realizing that an excessive speed was actually reached. The problem is particularly serious with young and in any case inexperienced athletes, for whom it is important to avoid their speed becoming unsuitable for their own technical control capabilities. The use of speedometer devices, where possible and without considering the aspects related to costs, does not resolve the problem, since it is often impossible for the athlete to view the device while being involved in the hectic conditions caused by its own physical exertion.

The present invention overcomes such a state of affairs, thanks to a device that, still with the maximum structural and functional simplicity, responds in a perfectly effective manner to the safety requirements described above.

In fact, according to the present invention, there is provided a garment or a clothing accessory, in particular but not exclusively a helmet or a hat, characterized in that it comprises acoustic warning means suitable for emitting an acoustic alarm in response to a user's speed.

According to the preferred embodiment, the exceeding of a threshold speed causes the acoustic alarm to be actuated. Possibly, the threshold speed can be adjusted as desired. Advantageously, a simple whistle can be used, with an air-inlet passage facing in the same direction as the running direction of the user, so that the sound emission is caused directly by the aerodynamic flow resulting from the motion. Should the whistle take the conventional mechanical configuration, the calibration of the threshold speed can be carried out through a reed arranged displaceably, and therefore adjustable according to the needs.

On the other hand, if the whistle is made with electronic implements, a microphone device, suitably filtered, will transmit a control signal to a small loudspeaker once the threshold speed has been exceeded. The threshold speed can be calibrated by intervening on a potentiometer. According to this embodiment, the alarm function can be disabled through a simple switch. The alarm sound can also be customized, selecting it from amongst a plurality of sounds pre-recorded in a memory element.

The invention shall now be illustrated in greater detail with the following description of an embodiment thereof, made as a non-limiting example, with reference to the attached drawings, in which:
- figure 1 is a schematic axonometric view of a hat according to the present invention;
- figure 2 represents, in isolation and again in an axonometric view, a whistle incorporated in the hat of figure 1;
- figure 3 shows a plan view from above of the whistle of figure 2;
- figure 4 is a median longitudinal section of the whistle of the previous figures, deprived of the internal electronic components; and
- figure 5 represents a circuit diagram of the whistle of the previous figures.

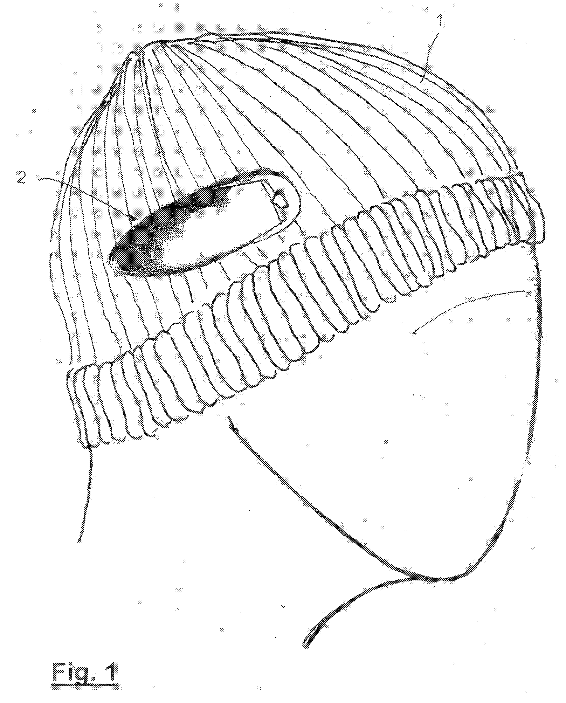

With reference to said figures, and in particular to figure 1, the article according to the invention is preferably intended to be worn on the user's head and can therefore, like in the example, consist of a hat 1 of whatever style, or else a helmet or a hair band. This is because the alarm function is carried out more effectively if the acoustic warning means are close to at least one of the user's ears.

Said warning means advantageously consist of a simple whistle device 2, connected onto the outside of the hat 1 so that the aerodynamic flow resulting from motion is able to command the emission of the sound. The connection to the hat 1 can be carried out through sewing or gluing, whereas it is clear that, in case of a head-protector with a rigid structure like a helmet, the device 2 can be integrated into the head-protector itself.

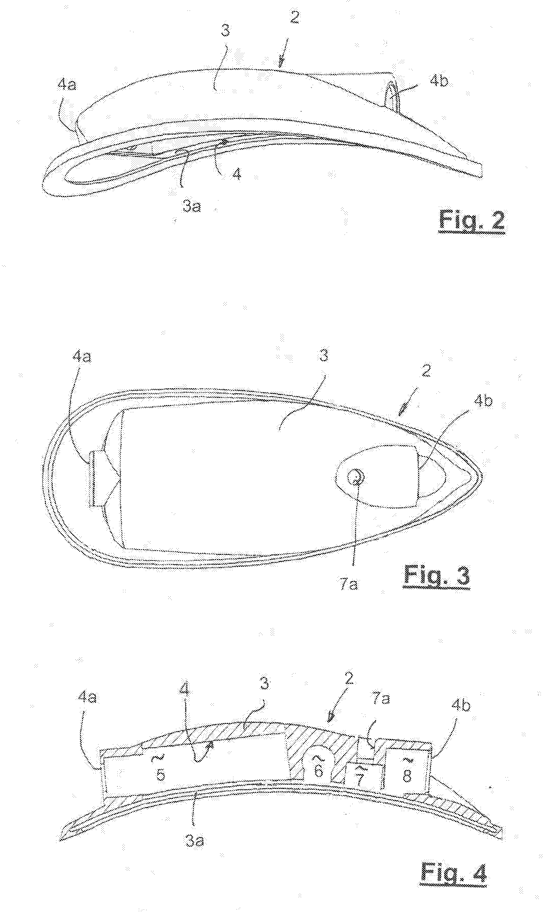

Going into further detail, with particular reference to figures 2 to 4, the whistle 2 can be a so-called "electronic whistle", of which the components and relative circuitry are housed inside an aerodynamically shaped casing 3. The casing 3 is made from rubber-like material to avoid the risk of causing harm to the user's head in case of an accident, and so as to ensure adequate protection of the internal components, especially with respect to the possible infiltration of humidity.

The casing 3 has, in particular and advantageously, a generally elongated dome-shaped configuration, the base of which, intended for connection with the hat, has a wide opening 3a blocked by a removable wall to ensure access to the inside of the casing. In the figures, for the sake of clarity of illustration, the wall has indeed been removed and is therefore not represented.

The inside of the dome-shaped casing 3 defines a chamber 4 of composite shape, which extends between a front end 4a, facing in the direction of motion and therefore transversally capturing the resultant aerodynamic flow, and a rear end 4b.

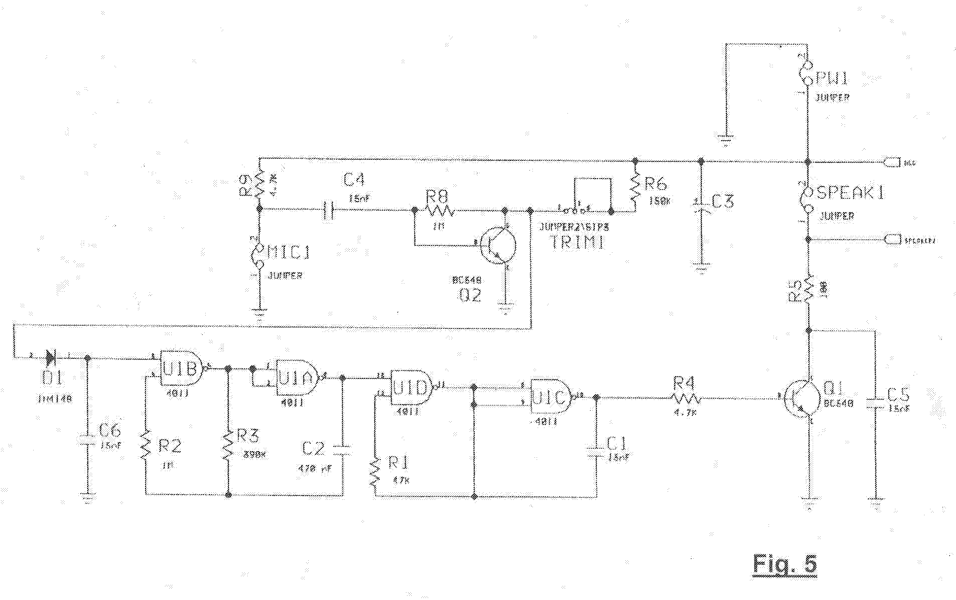

As can clearly be seen in figure 4, the chamber 4 is made up of a number of successive sections intended to receive the various electronic components of the device which, as such, are completely known or obviously derivable from the electronic whistles available on the market. A self-explanatory exemplifying circuit diagram of the device is in any case represented in figure 5. In particular, a first section 5 adjacent to the front end 4a houses a microphone capable of emitting a signal proportional to the speed of the aerodynamic flow that streams over it, and therefore to the user's speed. The first section 5 also houses most of the circuitry of figure 5, which as mentioned can be immediately understood by the skilled person, in which the following should be noted: a power supply battery, replaceable through the opening 3a at the base of the dome-shaped casing 3; and signal filtering means so that the acoustic emission is activated only by the detection by the microphone of the aerodynamic flow deriving from the speed, and not also from noises of whatever kind (in particular by voices).

A second section 6 houses a switch for completely disabling the device. The switch can be operated by pressing on the outside of the casing, which as mentioned is made from rubber-like material and therefore elastically yielding.

In a third section 7, open on the outside of the dome-shaped casing through a passage 7a, a potentiometer is arranged the adjustment of which allows a threshold speed to be set and adjusted, above and below which the microphone respectively does or does not activate the acoustic emission.

Finally, a fourth section 8 adjacent to the rear end 4b of the chamber 4 provides a housing for a micro-loudspeaker that emits the acoustic alarm, for example a simple whistle. In a variant embodiment, a memory element can also be provided, possibly arranged in the first section 5, with various pre-recorded sounds so that the user can customize the device by varying the type of sound emission. As stated, both the selection of the components to use and the relative ways of connecting the circuit are to be considered as completely obvious, based upon the required performances, for any expert in electronics.

As anticipated, according to an alternative to the electronic solution described above, the device 2 can adopt a traditional solution of a purely mechanical natural, i.e. it can consist of a conventional whistle. In this case, the aerodynamic flow captured by the inlet passage of the whistle shall directly actuate the acoustic alarm emission thanks to a suitably arranged reed, i.e. a laminar element that vibrates when air streams over it, thereby producing a sound. By adopting a reed with variable configuration or displaceably arranged, with manual control, the user shall be able to set and vary the threshold speed, an analogous effect being achievable through replaceable reeds.

From the above it is thus clear that, according to the invention, an athlete such as a cyclist, a skier, but also an ice-skater, a jockey, a sledge-rider and so on, can be immediately warned of the fact that his speed exceeds a certain limit, for example 30 or 40 km/h, thus being in a position to take suitable corrective actions. The safety goals accomplished with the invention shall clearly be of particular importance for younger or in any case less experienced athletes, and especially in the field of skiing where an acoustic alarm can be used to avoid the exceeding of the speed limits sets in the slopes, and thus the issuing of the consequent penalty fees by the administrative authorities. The acoustic warning can, moreover, also be used purely for the purposes of amusement.

Besides to an article to be worn on the head (hat, helmet or head band), the worn article according to the invention can consist of an actual garment such as a jacket or even a pair of trousers, with which the acoustic warning device shall preferably be associated or associable in a reversible manner. More generally, the invention can be applied to a clothing accessory or appendage item such as a belt, a clip, a pin; in this latter case, the invention will simply come down to associating or providing the whistle with suitable fastening means (adhesives means, sewing means, strap means, etc.) capable of allowing it to be fixed to the athletes body or to the relative means of transport (bicycle, horse, etc.).

According to the type of accessory or article, the mechanical characteristics of the device will be optimized for each case, still within a working equivalent to that which has been described above. In fact, the invention is not limited to the embodiment described and illustrated above, but it encompasses any variants thereof.

## Claims

1. A garment, clothing accessory or appendage **characterized in that** it comprises acoustic warning means (2) for emitting an acoustic alarm in response to the motion speed of a user.

2. The garment or accessory according to claim 1, wherein said acoustic warning means are arranged so as to emit said acoustic alarm when a preset threshold speed is exceeded.

3. The garment or accessory according to claim 2, wherein said acoustic warning means consist of a whistle (2) comprising an air-inlet passage facing in the same direction as the running direction of the user, thereby the acoustic alarm is caused directly by the aerodynamic flow resulting from the motion.

4. The garment or accessory according to claim 3, comprising a reed arranged so as to be displaceable, adaptable or replaceable, in order to allow the variation of said threshold speed.

5. The garment or accessory according to claim 2, wherein said acoustic warning means consist of an electronic whistle (2) comprising: loudspeaker means; speed detection microphone means for transmitting to said loudspeaker means a signal that is a function of said motion speed; battery power supply means; and circuit means for controlling and filtering said signal, in order to allow said threshold speed to be set and adjusted and to avoid the interference of external noises.

6. The garment or accessory according to claim 5, wherein said control circuit means comprise a potentiometer.

7. The garment or accessory according to claim 5 or 6, wherein said control circuit means comprise a switch for disabling the acoustic alarm emission.

8. The garment or accessory according to any of claims 5 to 7, wherein said device comprises a memory element on which a plurality of sounds are recorded for the user to customize the alarm sound emission.

9. The garment or accessory according to any of claims 5 to 8, wherein said loudspeaker means, said microphone means, said power supply means and said control and filter circuit means are housed in a casing (3) made from rubber-like material having a generally elongated dome-shaped arrangement, with said microphone means and said microphone means arranged, respectively, in correspondence to a front end and a rear end, the base of said dome-shaped casing having a large opening (3a) blocked by a removable wall to ensure access to the inside of the casing.

10. The garment according to any of claims 3 to 9, wherein said garment is an article (1) to be worn on the head and said whistle (2) is connected to said article (1) through sewing or gluing.

11. The garment according to claim 10, wherein said article (1) to be worn on the head is a helmet with a rigid structure, said whistle (2) being integrally formed in the helmet structure.

12. The accessory according to any of claims 3 to 9, comprising said whistle (2) and fixing means for fixing the same to the user's body or to means of transport ridden by said user.
